Europäisches Patentamt

European Patent Office

Office européen des brevets

(19)

(11) Veröffentlichungsnummer: **0 184 147 B1**

(12) **EUROPÄISCHE PATENTSCHRIFT**

(45) Veröffentlichungstag der Patentschrift: **18.12.91**

(21) Anmeldenummer: **85115131.6**

(22) Anmeldetag: **28.11.85**

(51) Int. Cl.⁵: **G11B 15/60,** G11B 15/61, G11B 15/56, G11B 15/18, G11B 23/087, G11B 27/04, G11B 21/02, G11B 5/584

(54) **Magnetbandgerät für Datenaufzeichnung.**

(30) Priorität: **01.12.84 DE 3443879**

(43) Veröffentlichungstag der Anmeldung:
**11.06.86 Patentblatt 86/24**

(45) Bekanntmachung des Hinweises auf die
Patenterteilung:
**18.12.91 Patentblatt 91/51**

(84) Benannte Vertragsstaaten:
**AT BE CH DE FR GB IT LI LU NL SE**

(56) Entgegenhaltungen:
**DE-A- 2 600 737**
**US-A- 2 963 555**
**US-A- 3 050 594**
**US-A- 3 692 255**

(73) Patentinhaber: **TELEFUNKEN Fernseh und Rundfunk GmbH**
**Göttinger Chaussee 76**
**W-3000 Hannover 91(DE)**

(72) Erfinder: **Platte, Hans-Joachim, Dipl.-Ing.**
**Königsberger Weg 22**
**W-3005 Hemmingen 4(DE)**
Erfinder: **Einsel, Robert, Dipl.-Ing.**
**Petersburgstrasse 28**
**W-3100 Celle(DE)**
Erfinder: **Schandl, Hartmut, Dipl.-Ing.**
**Egerstrasse 2**
**W-7730 Villingen(DE)**

(74) Vertreter: **Einsel, Robert, Dipl.-Ing.**
**TELEFUNKEN Fernseh und Rundfunk GmbH**
**Göttinger Chaussee 76**
**W-3000 Hannover 91(DE)**

**Beschreibung**

Die Erfindung betrifft ein Magnetbandgerät nach dem Oberbegriff des Anspruchs 1.

Es ist ein Magnetbandgerät für Datenaufzeichnung bekannt, bei dem das Magnetband zwischen zwei getrennt gelagerten Spulen hin und her bewegbar ist, wobei beide Spulen über Wickeldorne antreibbar ist. Solche Magnetbandgeräte werden für Längsaufzeichnung, Schrägspuraufzeichnung oder für Querspuraufzeichnung verwendet. Bei solchen Geräten befinden sich die Spulen meist in Kassetten. Bei der Längsaufzeichnung bleibt das Magnetband innerhalb der Kassette und der aufzeichnende oder abtastende Magnetkopf wird von außen gegen das in der Kassette befindliche zwischen zwei Bandführungen gespannte Band gedrückt. Bei der Schrägspuraufzeichnung wird vor der Aufzeichnung oder Abtastung das Magnetband aus der Kassette gezogen und um eine Kopftrommel herumgelegt. Bei der Querspuraufzeichnung kann das Magnetband ebenfalls in der Kassette verbleiben. Dabei wird aber das in der Kassette hin und her bewegbare Band an der Abtaststelle quer zu seiner Laufrichtung um ein Kopftrommelrad gewölbt, dessen Rotationsachse parallel zur Bandlaufrichtung liegt, dessen Spuren also im wesentlichen oder nahezu senkrecht zur Bandlaufrichtung auf das Band geschrieben werden. Für das Magnetbandgerät mit Querspuraufzeichnung ist es auch vorgeschlagen worden, das zur Aufzeichnung und/oder Abtastung dienende Kopfrad in Achsrichtung zur Standbildwiedergabe oder zur Spurkontrolle zu verschieben.

Der Erfindung liegt die Aufgabe zugrunde, ein Magnetbandgerät zu schaffen, bei dem eine Spurkontrolle und/oder ein Standbild ohne oder bei verminderter Kopfverschiebung erreicht wird. Diese Aufgabe wird bei einem Magnetbandgerät nach dem Oberbegriff des Anspruchs 1 durch die im Kennzeichen des Anspruchs 1 beschriebenen Merkmale gelöst. Weiterbildungen der Erfindung sind in den Unteransprüchen beschrieben.

Im Prinzip wird die Aufgabe dadurch gelöst, daß das zwischen den Bandführungen gespannte, bewegte oder unbewegte Magnetband ohne Ausnutzung des primären Bandantriebs relativ zu einem Bezugspunkt bewegbar ist, wobei die Bandführungen in einer das Magnetband beinhaltenden auswechselbaren Kassette angeordnet sind und die Bewegung des Magnetbandes, ohne Ausnutzung des primären Bandantriebes, durch Verschiebung von mindestens einer der Bandführungen erfolgt.

Aus der US-A-3 050 594 ist es bekannt, daß ein zwischen ortsfesten Bandführungen gespannter bandförmiger Speicherträger mit Hilfe von zwei beweglichen Bandführungen relativ zu einem Bezugspunkt bewegbar ist. Bandführungen und Speicherträger, die in einer Kassette gelagert sind, werden dort aber nicht behandelt.

Zu näheren Erläuterung der Erfindung werden im folgenden mehrere Ausführungsbeispiele anhand der Zeichnungen beschrieben. Diese zeigen in

Fig. 1    die Prinzipdarstellung der Erfindung,
Fig. 2    die Detaildarstellung eines in seiner Achsrichtung verstellbaren Kopfradsystems,
Fig. 3    die Ausführungsform einer Kassette gemäß der Erfindung,
Fig. 4    eine andere Ausführungsform einer Kassette gemäß der Erfindung,
Fig. 5    eine Detaildarstellung aus Fig. 3,
Fig. 6    ein Ausführungsbeispiel mit in der Kassette gelagerten Wickeln, die selbst nicht angetrieben werden,
Fig. 7    ein Diagramm Fig. 8 einen Verschiebemechanismus.

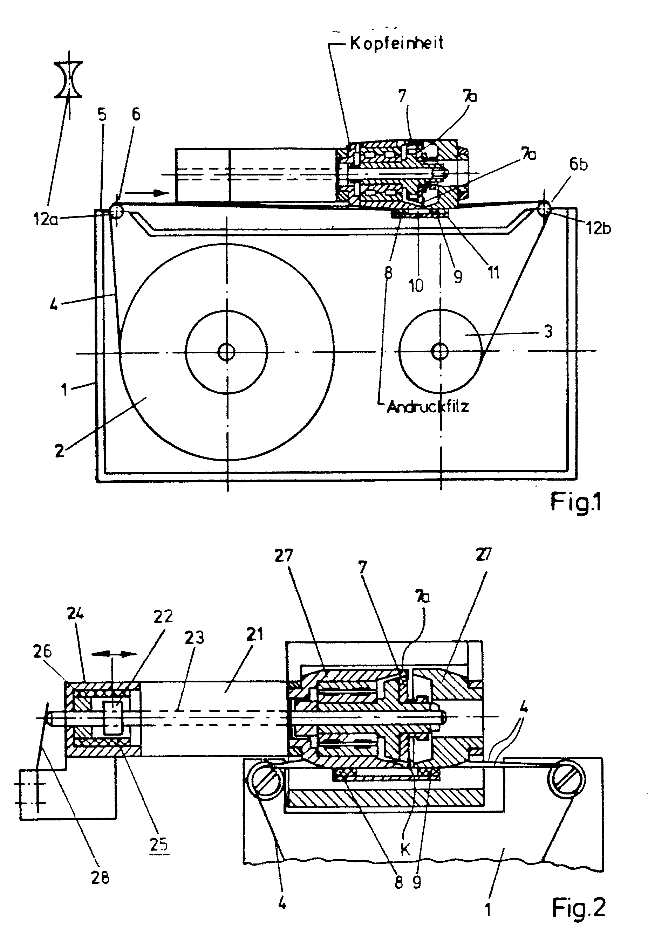

In Fig. 1 ist ein Magnetbandgerät mit zwei in einer Kassette 1 angeordneten Spulen oder Bandwickeln 2 und 3 dargestellt, zwischen denen ein Magnetband 4 hin und her bewegbar ist. Das Magnetband 4 wird in der Längsstirnseite 5 der Kassette 1 herausgeführt, beispielsweise mittels einer Nase 6 und im Bereich der Abtaststelle zur Querspuraufzeichnung der Form eines Kopfrades 7 angepaßt. Dies geschieht beispielsweise mittels zweier Filzstücke 8 und 9, die beidseitig der Abtaststelle angeordnet sind und zwischen sich eine rillenartige Vertiefung 10 freilassen. Die Filzstücke 8, 9 sind auf einer flexiblen Unterlage 11 befestigt, die in der Kassette 1 ortsfest gelagert ist und eine flexible Anpassung der Filzstücke 8, 9 an den Außendurchmesser der Kopftrommel 7 ermöglichen. Das Band 4 wird über die Filzstücke 8, 9 an das Kopfrad 7 geschmiegt und dabei so gespannt, daß optimale Abtasteigenschaften des Bandes 4 im Bereich der Köpfe 7a des Kopfrades 7 sich ergeben (Band-Kopf-Kontakt). Das Kopfrad 7 ist als Kopftrommel oder Bandführungszylinder ausgebildet oder in eine Kopftrommel eingefügt. Die Wölbung des Bandes 4 ist so bemessen, daß der Umschlingungswinkel des Bandbereiches je nach Kopfrad- oder Kopftrommeldurchmesser zwischen 40 und 70° beträgt. Im Bereich der Nase oder Austrittsstelle 6 aus der Kassette 1 vor dem Einlauf zur Abtaststelle bzw. im Bereich der Eintrittsstelle 6b in die Kassette hinter der Abtaststelle sind eine Bandführung 12a bzw. 12b vorgesehen. Die Begrenzungslinien des Längsschnittes dieser Führungen 12a,12b sind im wesentlichen bikonkav. Dadurch wird erreicht, daß das Band 4 vor der Eintrittsstelle zur Abtastung vorgewölbt wird.

Fig. 2 zeigt in einer teilweisen Schnittdarstellung das Antriebssystem für das Kopfrad 7 in Arbeitsstellung zusammen mit einer eingelegten Magnetbandkassette 1, in der ein Magnetband 4 angetrieben wird. Das Magnetband 4 liegt zwischen dem Kopfrad 7 bzw. einem das Kopfrad 7 enthaltenden Bandführungszylinder 27 und den Andruckfilzen 8,9. Der Bandführungszylinder 27 ist bei diesem Beispiel fest angebracht, rotiert aber nicht. Dabei wird das Magnetband 4 im Wirkungsbereich der auf den Kopfrad 7 angeordneten Magnetköpfe 7a derart gewölbt, daß seine Oberfläche an den durch die Magneteköpfe 7a beschriebenen Kreis angepaßt wird. Diese exakte Anpassung ermöglicht einen guten Band-Kopf-Kontakt. Das Kopfrad 7 ist mit 2n Köpfen 7a versehen, deren Spalte abwechselnd unterschiedliche Azimutwinkel aufweisen.

Die Zuführung bzw. Abnahme der Signalspannungen zu bzw. von den Magnetköpfen 7a geschieht mittels zweier Drehtransformatoren 24. Dabei sind bei vier und mehr Köpfen die Magnetköpfe 7a mit gleichem Azimutwinkel mit jeweils einem Drehtransformator 24 elektrisch verbunden. Dieses kann durch Reihen- oder auch durch Parallelschaltung der Magnetkopfspulen erfolgen.

Der Antrieb das Kopfrades 7 geschieht durch den Antriebsmotor 21, welcher mit dem Kopfrad 7 und einem für die Nachsteuerung dienenden elektromechanischen Wandler 25 auf einer gemeinsamen Achse 23 angeordnet ist. Der elektromechanische Wandler 25 besteht aus einer Spule 26, in die ein Weicheisenkern 22 und damit die ihn tragende Achse bei Anlegen einer Steuerspannung gegen eine Feder 28 gezogen wird.

Der Wandler 25 ist vorzugsweise Teil des Antriebsmotors 21, so daß bei Anlegen der Steuerspannung der Rotor des Motors 21 in Achsrichtung verschoben wird.

Bei einem erprobten Ausführungsbeispiel wurde für die Filzstücke 8,9 eine flexible Unterlage 11 eine Folie aus Kupferberyllium verwendet. Diese Folie hat bei antimagnetischen Eigenschaften eine ausreichende Elastizität und Dauerfestigkeit. Die Unterlage 11 kann selbst eben sein bei geformten Filzstücken 8,9. Die Unterlage 11 kann aber auch selbst an den Kopfraddurchmesser angepaßt sein und mit Filzstücken 8,9 gleichmäßig flachen Aufbaus versehen sein.

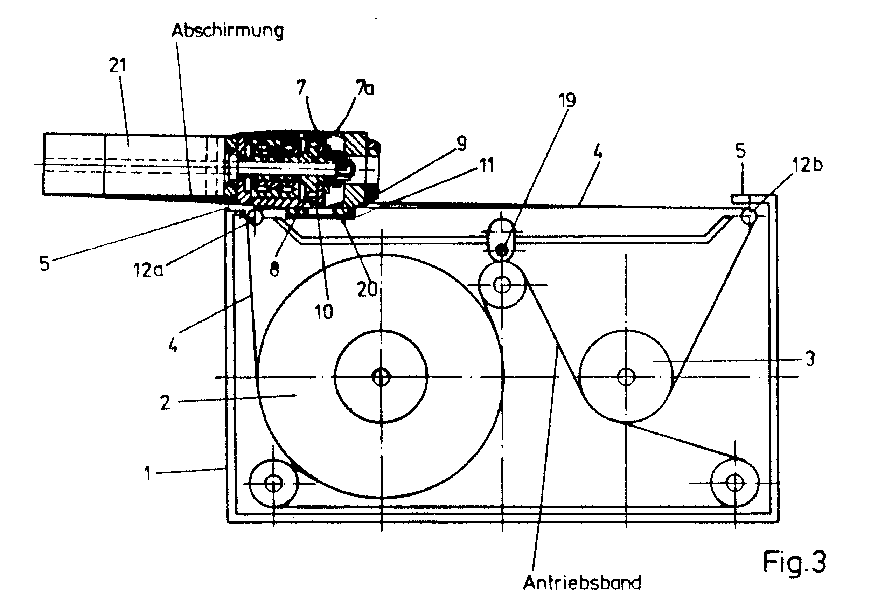

In Fig. 3 ist eine Abwandlung der Kassette 1 dargestellt, in der die Bandwickel 2 und 3 nicht mehr direkt angetrieben werden, sondern ohne eigenen direkten Antrieb in der Kassette 1 drehbar gelagert sind. Der eigentliche Antrieb erfolgt durch eine gesonderte Rolle 19, die in die Kassette 1 von außen eingeführt wird und das Band 4 selbst im Bereich zwischen den Bandwickeln 2,3 antreibt. Eine Kassette mit solchem Antrieb ist beispielsweise in den deutschen Patenten P 11 87 028 und 22 30 281 beschrieben.

Die Kassette ist so beschaffen, daß die zur Wölbung des Bandes bikonkav geformten Bandführungen oder Rollen 12a,12b nahe der Kanten der Kassette 1 angeordnet ist, die die dem Kopfrad 7 zugewandte Längsstirnseite 5 begrenzen. Im Gerät ist das Kopfrad 7 so angeordnet, daß die Abtaststelle nahe der Rolle 7 liegt und der das Kopfrad 7 antreibende Motor 21 außerhalb des Bereichs der Kassette 1. Dadurch werden evtl. Magnetstreufelder des Motors 21 von der Kassette 1 und dem Band 4 ferngehalten. Evtl. noch störende Magnetfelder können durch Abschirmungen im Gerät und/oder der Kassette vom Band ferngehalten werden.

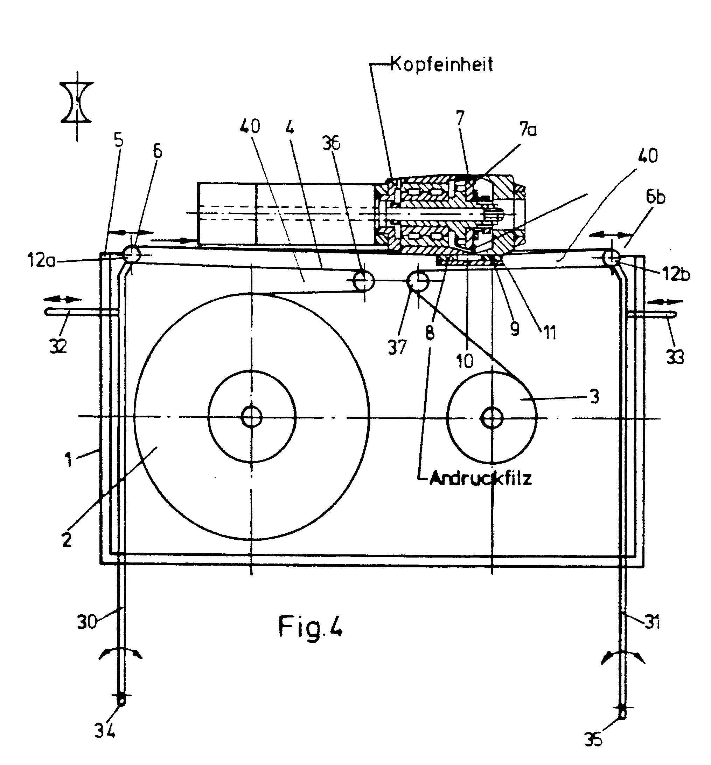

Fig. 4 zeigt eine erfindungsgemäße Weiterbildung der in Fig. 1 dargestellten Kassette 1, die eine dem Wandler 25 ähnliche Funktion ermöglicht. Das Band 4 ist von den Bandführungen 12a,12b nicht direkt zu den Bandwickeln 2,3 geführt, sondern zur Bildung von einer oder zwei Bandschleifen 40 um eine oder zwei weitere Bandführungen 36,37 geleitet. Die Bandführungen 12a,12b sind im wesentlichen parallel zur Bandlaufrichtung im Abtastbereich verschiebbar. Zu diesem Zweck sind zwei Hebel 30,31 vorgesehen, die gemeinsam durch Schieber 32,33 um je eine Achse 34,35 schwenkbar sind. Die Verschiebung erfolgt in Abhängigkeit von Steuersignalen zur Spureinstellung und/oder zur Erzeugung von einem genauen Bild oder Teilbildern entsprechenden Spuren. Auf diese Weise kann die Spurlage relativ zu den Köpfen 7a korrigiert und/oder stehende Bilder geschrieben werden.

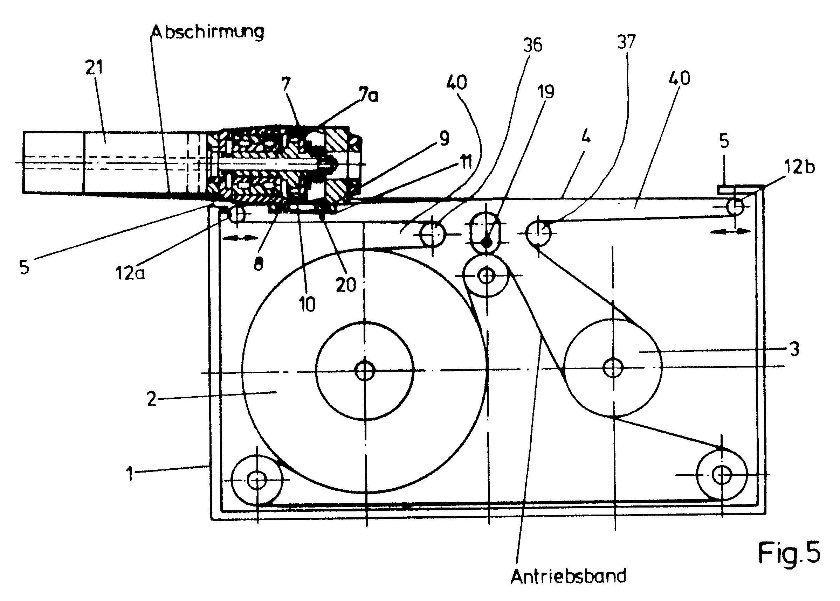

Fig. 5 zeigt eine Abwandlung der in Fig. 4 dargestellten Anordnung entsprechend Fig. 3. Die Verschiebung der Bandführungen 12a,12b kann wie in Fig. 4 durch Schwenkhebel oder durch elektrisch gekoppelte oder durch mechanisch gekoppelte Mittel geschehen.

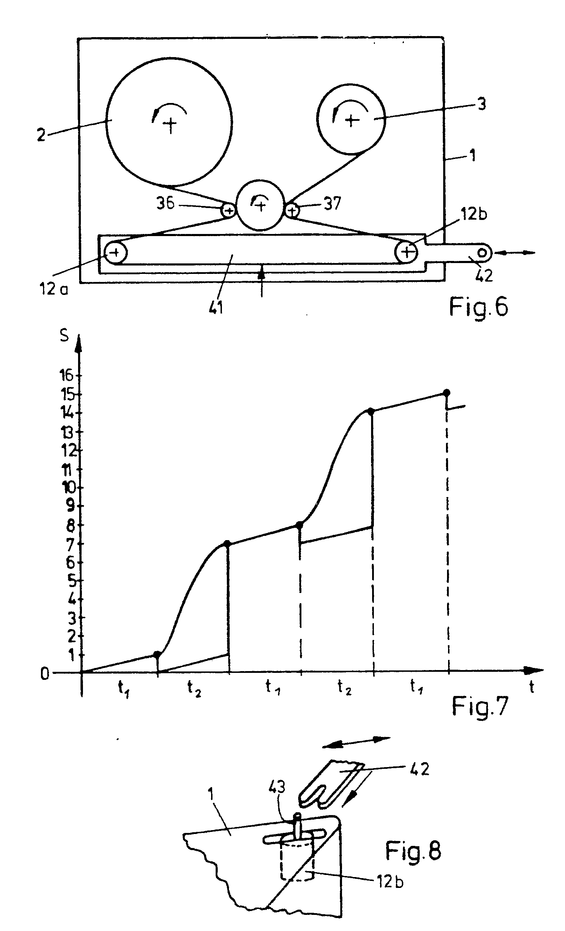

Fig. 6 zeigt eine Ausführung mit einem Formkörper 41, der eine gleichzeitige Verschiebung der beiden Bandführungen 12a,12b ermöglicht. Zu diesem Zweck sind in Fig. 6 die beiden Bandführungen 12a,12b auf dem Formkörper 41 drehbar befestigt. Der Formkörper 41 ist in der Kassette 1 verschiebbar gelagert. Ein Ansatz 42 ist von außen zugänglich und von einem nicht dargestellten elektromechanischen Wandler bewegbar, der durch Steuersignale mit einer für die Spurlagerkorrektur bzw. Spurverschiebung erforderlichen Genauigkeit einstellbar ist.

Fig. 7 zeigt ein Weg-Zeit-Diagramm mit einem mit der Erfindung für schnellen Vorlauf erreichbaren Bewegungsablauf. Die Ordinate s zeigt die Wege, die Abszisse t die Zeit. Während der Zeit t1 werde das Band an der Abtaststelle 10 mit kontinuierlicher stetiger Geschwindigkeit bewegt, wie es für Lesen und Schreiben der Spuren üblich ist. Zugleich wird das Signal zu Bild 1 in einen Speicher eingelesen und auch auf einem Bildschirm dargestellt. Während der Zeit t2 werde dem Band 4 zusätzlich durch Verschiebung des Bandes 4 in Bandlaufrichtung durch Verschiebung des Formkörpers 41 eine Bewegungskomponente überlagert. Dadurch ergibt sich in t2 eine zunächst beschleunigte, dann schnelle und schließlich gebremste Bewegung, die den Kopf 7a an den Anfang des z.B. 7. Bildes führt. Während des Vorlaufs wird aus dem Speicher das 1. Bild wiederholt. Während des nächsten Abschnittes t1 (alle Abschnitte t1 haben Speicherung und Wiedergabe; alle Abschnitte t2 schnellen Vorlauf und Wiedergabe des Speicherinhalts) wird Bild 7 gelesen und zugleich wiedergegeben. Ähnlich ist auch schneller Rücklauf möglich.

Fig. 8 zeigt eine Abwandlung, bei der die Achsen 43 der Bandführungsrollen 12a,12b aus der Kassette herausragen und in Betätigungsmittel wie den gesteuerten Ansatz 42 eingreifen.

Der Ansatz 42 kann durch elektromechanische Wandler gesteuert werden. Es ist aber auch möglich, für bestimmte Anwendungen eine Profilsteuerung vorzusehen.

## Patentansprüche

1. Magnetbangerät zur Datenaufzeichnung und -Wiedergabe mit an drehenden Kopfrädern (7) angebrachten Magnetköpfen, die ein bewegbares, zwischen zwei ortsveränderbaren Bandführungen (12a, 12b) gespanntes Magnetband abtasten, wobei das Magnetband zwischen Aufwickelspule (3) und Abwickelspule (2) eine Bandschleife durchläuft, die durch die Bandführungen (12a, 12b) gebildet wird, und die Bandführungen (12a, 12b) durch im Magnetbandgerät angeordnete Steuermittel (32, 33, 42) derart verschiebbar sind, daß der zwischen den Bandführungen (12a, 12b) gespannte Teil des Magnetbandes (4) bei bewegtem und/oder unbewegtem Magnetband relativ zu einem Bezugspunkt in Bandlaufrichtung bewegbar ist, dadurch gekennzeichnet, daß das Magnetband und die Bandführungen (12a, 12b) in einer auswechselbaren Kassette (1) angeordnet sind und bei eingelegter Kassette die Steuermittel mit mindestens einer der Bandführungen (12a, 12b) in Eingriff stehen, um die Bandführungen im wesentlichen parallel zur Bandlaufrichtung im Abtastbereich zu verschieben.

2. Magnetbandgerät nach Anspruch 1, dadurch gekennzeichnet, daß die beiden beweglichen Bandführungen (12a,12b) das Magnetband (4) so umlenken und eine Bandschleife (40) aufspannen, daß das Band (4) vor und nach Umlenkung durch jede bewegliche Bandführung (12a,12b) zunächst im wesentlichen parallel geführt wird.

3. Magnetbandgerät nach Anspruch 2, dadurch gekennzeichnet, daß die beiden beweglichen Bandführungen (12a,12b) so miteinander verbunden sind, daß sich ihr Abstand bei der gesteuerten Bewegung nicht ändert.

4. Magnetbandgerät nach den Ansprüchen 2 und 3, dadurch gekennzeichnet, daß die beweglichen Bandführungen (12a,12b) als ein Formkörper (41) ausgeführt sind, der translatorisch in Lage und Bewegungsgeschwindigkeit gesteuert wird.

5. Magnetbandgerät nach Anspruch 1, dadurch gekennzeichnet, daß die Steuerung der beweglichen Bandführungen von einem Spurführungssystem erfolgt.

6. Magnetbandgerät nach Anspruch 1, dadurch gekennzeichnet, daß die Bandführungen (12a,12b) sowie Auf- und Abwickelmechanismus in einem Steuersystem kombiniert sind.

## Claims

1. Magnetic tape apparatus for data recording and reproduction, with magnetic heads attached to rotating head wheels (7) and scanning a movable magnetic tape tensioned between two displaceable tape guides (12a, 12b), said magnetic tape passing between feed spool (3) and take-up spool (2) through a tape loop formed by the tape guides (12a, 12b), and the tape guides (12a, 12b) being displaceable in such a way by control means (32, 33, 42) disposed in the magnetic tape apparatus that that part of the magnetic tape (4) tensioned between the tape guides (12a, 12b) is movable relative to a reference point in the tape run direction with the magnetic tape moved and/or not moved, characterised in that the magnetic tape and the tape guides (12a, 12b) are disposed in an exchangeable cassette (1) and with the cassette inserted the control means engage with at least one of the tape guides (12a, 12b) in order to displace the tape guides substantially parallel with the tape run direction in the scanning zone.

2. Magnetic tape apparatus according to claim 1, characterised in that the two movable tape guides (12a, 12b) divert the magnetic tape (4) in such a way and stretch out a tape loop (40) that the tape (4) is before and after diversion led through each movable tape guide (12a, 12b) initially substantially in parallel.

3. Magnetic tape apparatus according to claim 2, characterised in that the two movable tape guides (12a, 12b) are connected to one another so that their spacing does not change during the controlled movement.

4. Magnetic tape apparatus according to claims 2 and 3, characterised in that the movable tape guides (12a, 12b) are constructed as a moulded body (41) which is controlled translationally as regards position and rate of motion.

5. Magnetic tape apparatus according to claim 1, characterised in that the control of the movable tape guides is carried out by a track control system.

6. Magnetic tape apparatus according to claim 1, characterised in that the tape guides (12a, 12b) and the feed and take-up mechanism are combined in a control system.

## Revendications

1. Appareil à bande magnétique pour l'enregistrement et la reproduction de données avec des têtes magnétiques fixées sur des roues de têtes rotatives (7) qui balaient une bande magnétique qui peut se déplacer qui est tendue entre deux guides de bande mobiles (12a, 12b), la bande magnétique parcourant une boucle de bande entre la bobine réceptrice (3) et la bobine débitrice (2), boucle qui est formée par les guides de bande (12a, 12b), et les guides de bande (12a, 12b) pouvant être translatés par des organes de commande (32, 33, 42) placés dans l'appareil à bande magnétique de telle manière que la partie de la bande magnétique (4), qui est tendue entre les guides de bande (12a, 12b), peut être déplacée par rapport à un point de référence dans le sens de déroulement de la bande, la bande magnétique étant déplacée et/ou n'étant pas déplacée, **caractérisé en ce** que la bande magnétique et les guides de bande (12a, 12b) sont placés dans une cassette interchangeable (1) et que, lorsque la cassette est mise en place, les organes de commande sont en prise avec au moins l'un des guides de bande (12a, 12b) pour translater les guides de bande de manière sensiblement parallèle au sens de déroulement de la bande dans la zone de balayage.

2. Appareil à bande magnétique selon la revendication 1, **caractérisé en ce** que les deux guides de bande mobiles (12a, 12b) dévient la bande magnétique (4) et retendent une boucle de bande (40) de telle manière que la bande (4) est tout d'abord guidée de manière sensiblement parallèle par chacun des guides de bande mobiles (12a, 12b) avant et après déviation.

3. Appareil à bande magnétique selon la revendication 2, **caractérisé en ce** que les deux guides de bande mobiles (12a, 12b) sont reliés l'un à l'autre de manière telle que l'écart qui les sépare ne change pas lors du déplacement commandé.

4. Appareil à bande magnétique selon les revendications 2 et 3, **caractérisé en ce** que les deux guides de bande mobiles (12a, 12b) sont conçus comme un corps moulé (41) dont la translation en position et la vitesse de déplacement sont commandées.

5. Appareil à bande magnétique selon la revendication 1, **caractérisé en ce** que la commande des guides de bande mobiles se fait par un système d'alignement de pistes.

6. Appareil à bande magnétique selon la revendication 1, **caractérisé en ce** que les guides de bande (12a, 12b) ainsi que le mécanisme d'enroulement et de déroulement sont combinés en un système de commande.

Fig.1

Fig.2

Abschirmung

Antriebsband

Fig.3

EP 0 184 147 B1

Kopfeinheit

Andruckfilz

Fig.4

Abschirmung

21  7  7a  40  36  37  40

9  19  4  5

11  12b

5  12a

8  20  10

3

2

1

Fig.5

Antriebsband

Fig.6

Fig.7

Fig.8